# EUROPEAN PATENT SPECIFICATION

(11) **EP 2 189 278 B1**
(45) Date of publication and mention of the grant of the patent: **17.08.2011**
(21) Application number: 09167979.5
(22) Date of filing: 08.12.2005
(51) Int. Cl.: B32B 7/12, B32B 27/38, B32B 27/08, C09J 163/00

(54) **Laminate film**
Laminierte Folie
Film stratifié

(30) Priority: 10.12.2004 JP 2004358495; 26.01.2005 JP 2005018024; 08.07.2005 JP 2005200592
(43) Date of publication of application: 26.05.2010
(62) Divisional of application: 05814614.3
(73) Proprietor: Mitsubishi Gas Chemical Company, Inc., Tokyo 100-8324 (JP)
(72) Inventor: Yonehama, Shinichi, 5-6-2, Higashiyawata, Hiratsuka-shi, Kanagawa 254-0016 (JP); Hirose, Shigeyuki, 5-6-2, Higashiyawata, Hiratsuka-shi, Kanagawa 254-0016 (JP); Honda, Eiichi, 5-6-2, Higashiyawata, Hiratsuka-shi, Kanagawa 254-0016 (JP); Takahashi, Masayoshi, 5-6-2, Higashiyawata, Hiratsuka-shi, Kanagawa 254-0016 (JP); Kashiba, Takashi, 5-6-2, Higashiyawata, Hiratsuka-shi, Kanagawa 254-0016 (JP); Naito, Toshiya, Chiyoda-ku, Tokyo 100-8324 (JP)
(74) Representative: Gille Hrabal Struck Neidlein Prop Roos

(56) References cited:
- EP-A2- 1 352 933

## Description

### TECHNICAL FIELD

The present invention relates to laminated films, and more particularly to laminated films including an adhesive layer which is excellent in barrier property against various gases. The laminated films are prevented from suffering occurrence of pinholes even when subjected to flexing, friction, etc., during transportation thereof, and are suitable as a packaging material for preserving foods, drugs, etc.

### BACKGROUND ART

In recent years, packaging materials have been predominantly prepared from a composite flexible film made of combination of different kinds of polymer materials because it is excellent in strength, goods-keeping property, workability, printability for advertising effects, etc. The composite flexible film generally includes an outer layer formed from a thermoplastic plastic film, etc., which serves for protecting goods, and a sealant layer formed from a thermoplastic plastic film, etc. These layers are laminated together by a dry-lamination method in which the sealant layer is bonded to a laminated film layer through an adhesive applied to the laminated film layer, or by an extrusion lamination method in which a melt-extruded plastic film as the sealant layer is press-bonded to the laminated film layer which may be optionally coated with an anchor coat agent, thereby laminating the sealant layer over the laminated film layer.

In these methods, two-part liquid polyurethane-based adhesives that are generally composed of a main ingredient containing an active hydrogen-containing group such as a hydroxyl group, and an isocyanate group-containing curing agent, have been predominantly used in view of a high adhesion property thereof (for example, refer to Patent Documents 1 and 2).

However, these two-part liquid polyurethane-based adhesives generally exhibit a relatively low curing speed. Therefore, in order to ensure a sufficient adhesion property of the two-part liquid polyurethane-based adhesives, the resultant laminated film must be aged for a long period of time, e.g., 1 to 5 days after the lamination for promoting the curing reaction. Also, since the curing agent containing isocyanate groups is used in the two-part liquid polyurethane-based adhesives, residual unreacted isocyanate groups tend to be present therein after curing. As a result, there may occur problems such as generation of bubbles in the resultant laminated film which is attributed to carbon dioxide produced by the reaction between the residual unreacted isocyanate groups in the adhesives and water in atmospheric air. In order to solve the above problems, polyurethane-based adhesives and epoxy-based adhesives for lamination have been proposed (refer to Patent Documents 3 and 4).

However, the above polyurethane-based adhesives as well as the epoxy-based adhesives for lamination exhibit a low gas-barrier property. Therefore, when these adhesives are applied to packaging materials requiring a high gas-barrier property, it is necessary to laminate various gas-barrier layers such as a polyvinylidene chloride (PVDC) coating layer, a polyvinyl alcohol (PVA) coating layer, an ethylene-vinyl alcohol copolymer (EVOH) film layer, a m-xylyleneadipamide film layer and an alumina- or silica-deposited film layer on a sealant layer such as a flexible polymer film layer through a bonding layer such as an adhesive layer and an anchor coat layer (refer to Patent Document 5). This results in the increase of the production costs of laminated films and complicates the laminating process. To solve these problems, gas-barrier adhesives for lamination have been proposed (Patent Document 6).

The gas-barrier adhesives for lamination are diluted with an alcohol upon use.

When the gas-barrier adhesives for lamination are applied to a printed surface of the substrate, there tend to occur problems such as separation of the adhesive layer from the ink layer, deteriorated cohesion of ink, to reduce the lamination strength.
Patent Document 1: JP 5-51574A
Patent Document 2: JP 9-316422A
Patent Document 3: JP 2000-154865A
Patent Document 4: WO 99/60068
Patent Document 5: JP 10-71664A
Patent Document 6: JP 2002-256208A

### DISCLOSURE OF THE INVENTION

As a result of extensive researches, the inventors have found that the above problems can be solved by a laminated film obtained by laminating at least a primer layer, an adhesive layer and a sealant layer on a substrate in this order, in which an adhesive used for forming the adhesive layer contains an epoxy composition composed of an epoxy resin and an epoxy resin-curing agent as a main component; a cured product of the epoxy composition contains a skeletal structure represented by the following formula 1: 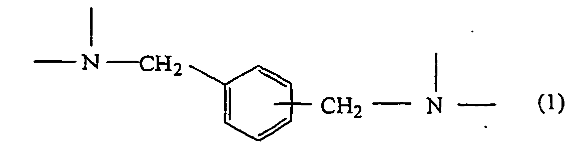 in an amount of 40% by weight or higher; and the primer layer contains at least one primer resin selected from the group consisting of polyurethane-based resins, vinyl chloride-vinyl acetate copolymer-based resins, rosin-based resins, polyamide-based resins and chlorinated olefin-based resins. The present invention has been accomplished on the basis of the finding.

### PREFERRED EMBODIMENTS FOR CARRYING OUT THE INVENTION

The laminated film of the present invention includes at least a substrate, an ink layer, a primer layer, an adhesive layer and a sealant layer which are laminated in this order. When forming the laminated film into a bag, the substrate layer forms an outside surface of the bag, whereas the sealant layer forms an inside surface thereof.

Examples of the substrate include poly amide-based films made of nylon 6, nylon 6,6, or poly-m-xylyleneadipamide (N-MXD6). The substrate may be in the form of either a single layer made of any one of the above materials or a laminate made of two or more kinds of materials. The plastic film used as the substrate may be stretched either monoaxially or biaxially.

The substrate may be coated with a suitable polymer such as a polyvinylidene chloride (PVDC) resin, a polyvinyl alcohol resin, a saponified product of an ethylene-vinyl acetate copolymer and an acrylic resin. Further, the coating polymer may contain inorganic fillers dispersed therein. In addition, various inorganic compounds such as silica and alumina or metals such as aluminum may be vapor-deposited on the substrate. If required, inorganic fillers may be dispersed in the substrate, or an oxygen-capturing property may be imparted thereto. Examples of the inorganic fillers include phyllosilicates, silica, alumina, mica, talc, aluminum flakes and glass flakes. Of these inorganic fillers, preferred are phyllosilicates such as montmorillonite, beidellite and nontronite. These inorganic fillers may be dispersed in the coating polymer or the substrate by known methods such as extrusion-kneading and mixing-dispersion in resin solutions. In order to impart an oxygen-capturing property to the substrate, for example, a composition containing a low-molecular weight organic compound reactive with oxygen such as hindered phenols, vitamin C, vitamin E, organophosphorus compounds, gallic acid and pyrogallol, or a compound of a transition metal such as cobalt, manganese, nickel, iron and copper may be incorporated into the substrate. The thickness of the substrate is preferably about 10 to 300 µm and more preferably about 10 to 100 µm.
The laminated film may also include one or more layers other than the substrate, the ink layer, the primer layer, the adhesive layer and the sealant layer, for example, a layer interposed between the adhesive layer and the sealant layer.

The surface of the substrate may be suitably subjected to various surface treatments such as flame treatment and corona discharge treatment, if desired, in order to form thereon the primer layer that is free from defects such as break and cissing. These treatments are effective for enhancing an adhesion of the primer layer to the substrate.

The primer layer is made of a primer having a good adhesion to the substrate. Various primers may be used for forming the primer layer as long as they have a good adhesion to the substrate. The primer comprises at least one material selected from the group consisting of polyurethane-based primers containing a polyurethane resin, a polyurethane urea resin, an acryl-modified urethane resin, or an acryl-modifled urethane urea resin; vinyl chloride-vinyl acetate copolymer-based primers; rosin-based primers containing a rosin-modified maleic acid resin; polyamide-based primers; and chlorinated olefin-based primers containing a chlorinated polypropylene resin.

Since the laminated film includes an ink layer, there is used at least one primer selected from the group consisting of polyurethane-based primers, vinyl chloride-vinyl acetate copolymer-based primers, rosin-based primers, polyamide-based primers and chlorinated olefin-based primers. Of these primers, more preferred are polyurethane-based primers and/or vinyl chloride-vinyl acetate copolymer-based primers which are relatively flexible and exhibit a high adhesion strength. The use of these primers avoids deterioration in cohesion force of the ink and imparts an excellent lamination strength.

The primer layer formed on the ink layer may contain an extender pigment. The resin of the primer layer is preferably of the same type as a binder resin contained in an ink composition used for forming the ink layer. A resin varnish having the same composition as that of a medium commercially available from ink makers may be used as the primer layer. When a curable primer layer is intended, either a one-part liquid curable type or a two-part liquid curable type may be used. The two-part liquid curable type material preferably contains a curing agent such as an aromatic polyisocyanate such as toluene diisocyanate (TDI) and diphenylmethane diisocyanate (MDI), or an aliphatic polyisocyanate such as hexamethylene diisocyanate (HMDI), isophorone diisocyanate (IPDI) and xylene diisocyanate (XDI).

Further, various additives may be added to the primer layer in order to impart other functions thereto. For example, various waxes, dispersants, antistatic agents and surface modifiers may be added to the primer layer in order to improve abrasion resistance, slip property, heat resistance, anti-blocking property and antistatic property.

The adhesive layer is made of an adhesive containing an epoxy composition composed of an epoxy resin and an epoxy resin-curing agent as a main component (51 to 100% by weight). The cured product of the epoxy composition contains the skeletal structure represented by the following formula 1: 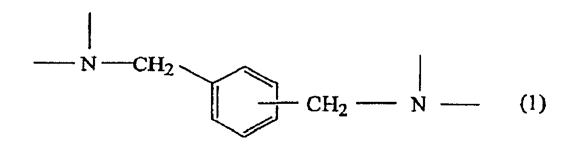 in an amount of 40% by weight or higher, preferably 40 to 90% by weight, more preferably 45 to 90% by weight and still more preferably 50 to 90% by weight. The cured epoxy resin exhibits a high gas-barrier property because of its high content of the skeletal structure of the formula 1. The adhesive layer according to the present invention exhibits a high oxygen-barrier property, i.e., an oxygen transmission coefficient of 1.0 mL·mm/(m²·day·MPa) or lower as measured at 23°C and 60% RH. Also, the cured epoxy resin is excellent in toughness and wet-heat resistance and, therefore, formed into a gas-barrier laminated film having excellent impact resistance, boiling treatment resistance and retort treatment resistance. In the followings, the epoxy resin and the epoxy resin-curing agent are explained.

The epoxy resin may be any of aliphatic compounds, alicyclic compounds, aromatic compounds and heterocyclic compounds. In view of a high gas-barrier property, preferred are epoxy resins containing an aromatic moiety in their molecules, and more preferred are epoxy resins containing the skeletal structure of the formula 1 in their molecules. Specific examples of the epoxy resin include epoxy resins containing a glycidylamino group derived from m-xylylenediamine, epoxy resins containing a glycidylamino group derived from 1,3-bis(aminomethyl)cyclohexane, epoxy resins containing a glycidylamino group derived from diaminodiphenylmethane, epoxy resins containing a glycidylamino group and/or a glycidyloxy group derived from p-aminophenol, epoxy resins containing a glycidyloxy group derived from bisphenol A, epoxy resins containing a glycidyloxy group derived from bisphenol F, epoxy resins containing a glycidyloxy group derived from phenol novolak, and epoxy resins containing a glycidyloxy group derived from resorcinol. Preferred are epoxy resins containing a glycidylamino group derived from m-xylylenediamine or 1,3-bis(aminomethyl)cyclohexane, and epoxy resins containing a glycidyloxy group derived from bisphenol F or resorcinol; more preferred are the epoxy resins containing a glycidyloxy group derived from bisphenol F and the epoxy resins containing a glycidylamino group derived from m-xylylenediamine; and still more preferred are the epoxy resins containing a glycidylamino group derived from m-xylylenediamine.

These epoxy resins may be used in combination of two or more in appropriate mixing ratio, in order to improve various properties such as flexibility, impact resistance and wet-heat resistance.

The epoxy resin is produced by reacting alcohols, phenols or amines with epihalohydrin. For example, the epoxy resins containing a glycidylamino group derived from m-xylylenediamine may be produced by the addition reaction of epichlorohydrin to m-xylylenediamine. Since m-xylylenediamine has four amino-hydrogen atoms, the above addition reaction results in production of mono-, di-, tri- and tetra-glycidyl compounds. The number of glycidyl groups in the resultant product may be altered by changing the molar ratio between m-xylylenediamine and epichlorohydrin to be reacted. For example, epoxy resins containing mainly four glycidyl groups may be obtained by the addition reaction in which about 4 mol of epichlorohydrin is added to 1 mol of m-xylylenediamine.

The above addition reaction may be performed by reacting alcohols, phenols or amines with an excess of epihalohydrin in the presence of an alkali such as sodium hydroxide at 20 to 140°C (preferably 50 to 120°C for the reaction of alcohols and phenols and 20 to 70°C for the reaction of amines). The thus produced epoxy resin is separated from the reaction mixture by removing the by-produced alkali halide. The number-average molecular weight of the epoxy resin varies depending upon the molar ratio of epichlorohydrin to alcohols, phenols or amines, and is about 80 to about 4000, preferably about 200 to about 1000 and more preferably about 200 to about 500.

The epoxy resin-curing agent may be any of aliphatic compounds, alicyclic compounds, aromatic compounds and heterocyclic compounds, and there may be used those generally used for curing epoxy resins such as polyamines, phenols, acid anhydrides and carboxylic acids. The epoxy resin-curing agent is selected according to the intended application of the laminated film as well as the properties required in the application.

Specific examples of the polyamines include aliphatic amines such as ethylenediamine, diethylenetriamine, triethylenetetramine and tetraethylenepentamine; aromatic ring-containing aliphatic amines such as m-xylylenediamine and p-xylylenediamine; alicyclic amines such as 1,3-bis(aminomethyl)cyclohexane, isophoronediamine and norbornanediamine; and aromatic amines such as diaminodiphenylmethane and m-phenylenediamine. Further, as the epoxy resin-curing agent, there may be also used epoxy resins produced from the polyamines, reaction products of the polyamines with a monoglycidyl compound, reaction products of the polyamines with a C₂ to C₄ alkyleneoxide, reaction products of the polyamines with epichlorohydrin, amide oligomers obtained by reacting the polyamines with a polyfunctional compound having at least one acyl group, and amide oligomers obtained by reacting the polyamines, a polyfunctional compound having at least one acyl group, and a monocarboxylic acid and/or its derivative.

Examples of the phenols include polyvalent phenols such as catechol, resorcinol and hydroquinone, and resol-type phenol resins. Examples of the acid anhydrides or carboxylic acids include aliphatic acid anhydrides such as dodecenylsuccinic anhydride and poly-adipic anhydride; alicyclic acid anhydrides such as (methyl)tetrahydrophthalic anhydride and (methyl)hexahydrophthalic anhydride; aromatic acid anhydrides such as phthalic anhydride, trimellitic anhydride and pyromellitic anhydride; and corresponding carboxylic acids of these anhydrides.

In view of a high gas-barrier property, preferred are epoxy resin-curing agents containing an aromatic structure in their molecules, and more preferred are epoxy resin-curing agents having the skeletal structure of the formula 1 in their molecules. Specific examples thereof include m- or p-xylylenediamine, epoxy resins produced from m- or p-xylylenediamine, reaction products of m- or p-xylylenediamine with a monoglycidyl compound, reaction products of m- or p-xylylenediamine with a C₂ to C₄ alkyleneoxide, reaction products of m- or p-xylylenediamine with epichlorohydrin, amide oligomers obtained by reacting m- or p-xylylenediamine with a polyfunctional compound having at least one acyl group, and amide oligomers obtained by reacting m- or p-xylylenediamine, a polyfunctional compound having at least one acyl group, and a monocarboxylic acid and/or its derivative.

In view of a high gas-barrier property and a good adhesion to the primer layer, sealant layer and other layers, the epoxy resin-curing agent is preferably a reaction product of the following components (A) and (B) or a reaction product of the following components (A), (B) and (C):
(A) m-xylylenediamine or p-xylylenediamine;
(B) a polyfunctional compound having at least one acyl group which is capable of forming an amide oligomer by reacting with m-xylylenediamine or p-xylylenediamine; and
(C) a C₁ to C₈ monocarboxylic acid and/or its derivative.

Examples of the component (B) include carboxylic acids such as acrylic acid, methacrylic acid, maleic acid, fumaric acid, succinic acid, malic acid, tartaric acid, adipic acid, isophthalic acid, terephthalic acid, pyromellitic acid and trimellitic acid; and derivatives of these carboxylic acids such as esters, amides, acid anhydrides and acid chlorides, with acrylic acid, methacrylic acid and derivatives thereof being preferred. Examples of the component (C) include formic acid, acetic acid, propionic acid, butyric acid, lactic acid, glycolic acid and benzoic acid, and derivatives of these acids such as esters, amides, acid anhydrides and acid chlorides. The amide bonds introduced into the epoxy resin-curing agent by the reaction between these components have a high coagulation force. Therefore, when such amide bonds are present in a high content in the epoxy resin-curing agent, a higher oxygen-barrier property and a good adhesion strength to other film materials are obtained.

The reaction molar ratios of the components (A) and (B) and the components (A), (B) and (C) expressed by N_{B}/N_{A} and (N_{B} + N_{C})/N_{A}, wherein N_{A} represents the number of amino groups contained in the component (A), N_{B} represents the number of reactive functional groups (double bonds and acyl groups) contained in the component (B), and N_{C} represents the number of reactive functional groups (acyl groups) contained in the component (C), is preferably 0.3 to 0.97. If being 0.3 or more, since a sufficient amount of amide bonds are formed in the epoxy resin-curing agent, a high gas-barrier property and a sufficient adhesion property to the primer layer, sealant layer and other layers are obtained. In addition, since the content of residual volatile compounds in the epoxy resin-curing agent decreases, the generation of malodor from the resultant cured product is prevented. Further, since the content of hydroxyl groups in the cured product, which are produced by the reaction between epoxy groups and amino groups, decreases, a good oxygen-barrier property can be maintained even under high-humidity conditions. On the other hand, if being 0.97 or lower, good impact resistance, heat resistance and solubility in various organic solvents and water are obtained. In view of obtaining a cured product having a high gas-barrier property and a high adhesion strength, preventing the generation of malodor, and obtaining a high oxygen-barrier property even under high-humidity conditions, the reaction molar ratio is more preferably 0.6 to 0.97. Further, in view of exhibiting a still higher adhesion strength to the primer layer, sealant layer and other layers, the epoxy resin-curing agent preferably contains the amide bonds in an amount of at least 6% by weight.

The initial adhesion strength (lamination strength measured by peeling the laminated film at a peeling speed of 300 mm/min immediately after the lamination and before aging) of the laminated film of the present invention is preferably 30 g/15 mm or higher, more preferably 40 g/15 mm or higher and still more preferably 50 g/15 mm or higher. If the initial adhesion strength is insufficient, the laminated film tends to suffer from problems such as tunneling and defective winding.

In view of obtaining a high initial adhesion strength, it is preferred to use an oligomer having a high average molecular weight as the epoxy resin-curing agent, which is obtained using a reaction molar ratio N_{B}/N_{A} of 0.6 to 0.97, preferably 0.8 to 0.97 and more preferably 0.85 to 0.97. A more preferred epoxy resin-curing agent is a reaction product of m-xylylenediamine (component (A)) with at least one compound (component (B)) selected from acrylic acid, methacrylic acid and derivatives thereof preferably in a reaction molar ratio N_{B}/N_{A} of 0.8 to 0.97.

The adhesive used in the present invention contains the above epoxy composition composed of the epoxy resin and the epoxy resin-curing agent. The content of the epoxy composition in the adhesive is preferably at least 51% by weight (inclusive of 100% by weight). The blending ratio of the epoxy resin and the epoxy resin-curing agent in the epoxy composition is selected from the standard ratios that are generally used for producing a cured product of the epoxy resin by the reaction between the epoxy resin and the epoxy resin-curing agent. More specifically, the epoxy resin and the epoxy resin-curing agent are blended such that the ratio of the number of active hydrogen atoms in the epoxy resin-curing agent to the number of epoxy groups in the epoxy resin (active hydrogen atoms/epoxy groups) is preferably 0.5 to 5. If being 0.5 or more, the resultant cure product is prevented from suffering from deterioration in gas-barrier property due to residual unreacted epoxy groups. If being 5 or less, the resultant cured product is prevented from suffering from deterioration in wet-heat resistance due to residual unreacted amino groups. In particular, in view of a good gas-barrier property and a good wet-heat resistance of the resultant cured product, the ratio is more preferably 0.8 to 3 and still more preferably 0.8 to 1.4. Further, in view obtaining a high oxygen-barrier property under high-humidity conditions, the active hydrogen/epoxy group ratio is preferably 0.8 to 1.4.

The adhesive may optionally contain a thermosetting resin such as polyurethane-based resins, polyacrylic resins and polyurea-based resins in an amount of 0.1 to 49% by weight on the basis of the total weight of the epoxy composition (total weight of the epoxy resin and the epoxy resin-curing agent, and the same applies below) unless the effects of the present invention are adversely affected.

The adhesive may also optionally contain a wetting agent such as silicone and an acrylic compound to improve the wettability to a surface of the primer layer and other layers. Examples of the suitable wetting agent include BYK331, BYK333, BYK348 and BYK381 available from BYK Chemie GmbH. The amount of the wetting agent is, if used, preferably 0.01 to 2% by weight on the basis of the total weight of the epoxy composition.

The adhesive may also optionally contain a tackifier such as xylene resins, terpene resins, phenol resins and rosin resins to enhance the adhesion strength to the primer layer and other layers immediately after applying the adhesive. The amount of the tackifier is, if used, preferably 0.01 to 5% by weight on the basis of the total weight of the epoxy composition.

In addition, the adhesive may also contain an inorganic filler such as silica, alumina, mica, talc, aluminum flakes and glass flakes in order to enhance properties such as gas-barrier property, impact resistance and heat resistance of the adhesive layer. In view of a good transparency of the resultant film, the inorganic filler is preferably in the form of a flat plate. The inorganic filler is, if used, preferably added in an amount of 0.01 to 10% by weight on the basis of the total weight of the epoxy composition.

Further, the adhesive may also optionally contain an oxygen-capturing compound. Examples of the oxygen-capturing compound include low-molecular weight organic compounds capable of reacting with oxygen such as hindered phenols, vitamin C, vitamin E, organophosphorus compounds, gallic acid and pyrogallol, and compounds of transition metal such as cobalt, manganese, nickel, iron and copper. The oxygen-capturing compound is, if used, preferably added in an amount of 0.0001 to 10% by weight on the basis of the total weight of the epoxy composition.

In addition, the adhesive may also contain a coupling agent such as silane coupling agents and titanium coupling agents in order to enhance the adhesion strength of the adhesive layer to the primer layer, sealant layer and other layers. The coupling agent is, if used, preferably added in an amount of 0.01 to 5% by weight on the basis of the total weight of the epoxy composition.

The adhesive layer formed from the above adhesive exhibits not only a good adhesion property to the primer layer, sealant layer and other layers, but also a high gas-barrier property over a broad range of from low-humidity conditions to high-humidity conditions. Therefore, the laminated film of the present invention shows an extremely high gas-barrier property without using a general gas-barrier material such as PVDC coating layer, PVA coating layer, EVOH-based film layer, N-MXD6-based film layer and alumina- or silica-deposited film layer. However, the known gas-barrier material may be laminated on the sealant layer through the above adhesive to further improve the gas-barrier property of the laminated film.

The known gas-barrier films such as EVOH-based films, PVA-based films, PVA-coated films, inorganic filler-dispersed PVA-coated films and N-MXD6 films generally exhibit a lowered gas-barrier property under high-humidity conditions. However, when these gas-barrier films are laminated together through the above adhesive, this drawback is removed.

The sealant layer is made of a flexible polymer. In view of exhibiting a good heat sealability, the sealant layer is made of a polyolefin selected from low-density polyethylene, linear low-density polyethylene and polypropylene, or an ethylene-vinyl acetate copolymer. The sealant layer has a thickness of preferably about 10 to 300 µm and more preferably about 10 to 100 µm, and may be subjected to various surface treatments such as flame treatment and corona discharge treatment.

An ink layer is formed on the surface of the substrate. The ink layer may be formed from a known ink composition for polymer films which contains a pigment, a binder resin, a solvent, etc. Examples of the pigment include organic pigments such as azo-based, phthalocyanine-based and isoindolinone-based pigments, and inorganic pigments such as titanium dioxide, carbon black and calcium carbonate. Examples of the binder resin include polyurethane-based resins such as polyurethane resins, polyurethane urea resins, acryl-modified urethane resins and acryl-modified urethane urea resins; vinyl chloride-vinyl acetate copolymer-based resins; rosin-based resins such as rosin-modified maleic acid resins; polyamide-based resins; and chlorinated olefin-based resins such as chlorinated polypropylene resins. Examples of the solvent include water, methanol, 2-propanol, ethyl acetate, methyl ethyl ketone and toluene.

In the followings, the process for producing the laminated film of the present invention is described.

When forming the ink layer on the substrate, the surface of the substrate is preferably subjected to various surface treatments such as flame treatment and corona discharge treatment, if desired, in order to prevent the defects such as the break of ink layer and the cissing of ink. The ink layer may be produced by known printing apparatuses for polymer films, such as gravure printing machines, flexographic printing machines and offset printing machines. The ink layer may be formed either continuously (whole surface printing) or discontinuously (partial printing). The thickness of the ink layer is preferably about 0.01 to 10 µm and more preferably about 0.1 to about 5 µm.

The primer layer may be formed by a general dry lamination method, in which a primer layer is formed on a substrate using a dry laminator, the formed laminate is wound up, and then, an adhesive layer and a sealant layer is laminated on the unwound laminate using the same dry laminator, or in which a primer layer, an adhesive layer and a sealant layer are continuously dry-laminated on a substrate in this order using a dry laminator with an in-line coater. If the ink layer is formed on the substrate using a general printing apparatus such as gravure printing machines, flexographic printing machines and offset printing machines, since the primer layer is successively formed on the ink layer in an in-line continuous manner, a separate process for coating primer can be omitted.

In the dry lamination method, the primer layer is formed on the substrate by using a primer composition prepared by dissolving a primer in a solvent. The primer composition is applied onto the substrate at a concentration and a temperature enough to form the primer layer. The solvent for the primer composition is not particularly limited as long as the primer is dissolved therein. Examples of the solvent include water; water-insoluble solvents such as toluene, xylene, ethyl acetate, butyl acetate, acetone and methyl ethyl ketone; glycol ethers such as 2-methoxyethanol, 2-ethoxyethanol, 2-propoxyethanol, 2-butoxyethanol, 1-methoxy-2-propanol, 1-ethoxy-2-propanol and 1-propoxy-2-propanol; alcohols such as methanol, ethanol, 1-propanol, 2-propanol, 1-butanol and 2-butanol; aldehydes such as acetaldehyde and propionaldehyde; and aprotic polar solvents such as N,N-dimethylformamide, N,N-dimethylacetamide, dimethyl sulfoxide and N-methylpyrrolidone. In view of reducing the amount of the residual solvent in the primer layer, preferably used is at least one solvent having a relatively low boiling point selected from the group consisting of methanol, ethanol, 2-propanol, 1-propanol, ethyl acetate, acetone, methyl ethyl ketone, acetaldehyde and propionaldehyde.

The primer composition may be applied on the substrate by a known coating method such as roll coating, spray coating, air-knife coating, dip coating and brush coating. Among these coating methods, preferred is a roll coating in which the primer composition is applied on the substrate using a roll such as a gravure roll and a solid roll, and then the solvent is removed to form the primer layer.

The concentration of the primer composition (coating solution) is preferably regulated using the solvent such that a Zahn cup (No. 3) viscosity of the composition is 5 to 30 s at 25°C. Within the above range, the primer composition exhibits a good coatability, resulting in a uniform primer layer.
In the dry lamination, the Zahn cup (No. 3) viscosity of the primer composition during coating is preferably 10 to 20 s at 25°C.

The solvent is removed preferably at 20 to 140°C and more preferably at temperatures which are close to the boiling point of the solvent but do not adversely affect the substrate. Within the above range, the solvent is inhibited from remaining in the substrate, thereby avoiding generation of malodor. Further, the substrate is free from softening, thereby obtaining a film having a good appearance. For example, the temperature for removing the solvent is preferably 40 to 120°C when the substrate is made of a stretched polypropylene film.

When the primer layer is formed on the ink layer, it is required to cover a whole surface of the ink layer. If the ink layer is not continuous, the primer layer may be directly formed on the exposed surface of the substrate.

The thickness of the primer layer is preferably 0.01 to 20 µm, more preferably 0.01 to 10 µm and still more preferably 0.1 to 5 µm. Within the above range, the resultant primer layer exhibits a sufficient adhesion property and a uniform thickness.

The adhesive layer is formed by known laminating methods such as dry lamination, non-solvent lamination and extrusion lamination.

The adhesive is applied onto the primer layer in the form of a dilute coating solution containing the epoxy composition at a concentration of about 5% by weight which is prepared by diluting the adhesive with an organic solvent and/or water, or in the form of a non-diluted coating solution. The concentration of the epoxy composition and the temperature are appropriately determined according to the kinds and amounts of primer layer, epoxy resin, epoxy resin-curing agent, etc. and the laminating method to be used so that the cured product of the epoxy resin mentioned above is obtained. As the organic solvent, there may be used any solvents capable of dissolving the adhesive. Examples of the organic solvent include water-insoluble solvents such as toluene, xylene, methyl acetate, ethyl acetate, butyl acetate, acetone and methyl ethyl ketone glycol ethers such as 2-methoxyethanol, 2-ethoxyethanol, 2-propoxyethanol, 2-butoxyethanol, 1-methoxy-2-propanol, 1-ethoxy-2-propanol and 1-propoxy-2-propanol; alcohols such as methanol, ethanol, n-propanol, isopropanol, 1-butanol and 2-butanol; aldehydes such as acetaldehyde and propionaldehyde; and aprotic polar solvents such as N,N-dimethylformamide, N,N-dimethylacetamide, dimethyl sulfoxide and N-methylpyrrolidone.

The adhesive is diluted with the solvent such that the resultant coating solution has a Zahn cup (No. 3) viscosity of 5 to 30 s at 25°C. In the dry lamination, the Zahn cup (No. 3) viscosity of the adhesive coating solution during use is preferably 10 to 20 s at 25°C. Within the above range, a sufficient amount of the coating solution is applied onto the primer layer since the coating solution is uniformly transferred onto a coating roll without staining the roll.

A defoaming agent such as silicone and an acrylic compound may be added to the coating solution to prevent the foaming upon preparation of the coating solution. Examples of the suitable defoaming agent include "BYK019", "BYK052", "BYK067N", "BYK070" and "BYK080" available from BYK Chemie GmbH; "Disparlon 1930N", "Disparlon 1934", "Disparlon LS-009" and "Disparlon AQ-501" available from Kusumoto Chemicals, Ltd.; and "Aqualen 7447", "Granol B-1484" and "Flowlen TW-4000" available from Kyoeisha Chemical Co., Ltd. Preferred are "BYK019" and "Disparlon 1930N." The amount of the defoaming agent is, if used, preferably 0.0001 to 3% by weight, more preferably 0.0005 to 2% by weight and still more preferably 0.001 to 1.5% by weight on the basis of the total weight of the epoxy composition in the coating solution.

After applying the coating solution, the solvent is removed at temperatures within the range of 20 to 140°C which are close to the boiling point of the solvent but do not adversely affect the applied material. If being 20°C or higher, the amount of the residual solvent in the resultant laminated film is reduced, thereby avoiding poor adhesion and generation of malodor. If being 140°C or lower, the polymer films are free from softening, thereby obtaining a laminated film having a good appearance. For example, the temperature for removing the solvent is preferably 40 to 120°C when the substrate is made of a stretched polypropylene film.

The adhesive is applied by a known coating method such as roll coating, spray coating, air-knife coating, dip coating and brush coating, with roll coating and spray coating being preferred. For example, there may be used the same roll coating or spray coating method as used for applying a known polyurethane-based adhesive onto a polymer film.

Next, the procedure for each laminating method is explained in detail.

In the dry lamination method, the coating solution is applied onto the primer layer using a roll such as a gravure roll, and then, immediately after removing the solvent, the sealant layer is laminated on the surface of the obtained adhesive layer by a nip roll preferably at 20 to 120°C and more preferably at 40 to 100°C to obtain a laminated film. A solvent containing an alcohol having 3 or less carbon atoms which has a high dissolving power to the adhesive and a relatively low boiling point is preferably used as the solvent for the coating solution. Preferably, the solvent contains at least one alcohol selected from the group consisting of methanol, ethanol, isopropanol and n-propanol as a main component. The solvent is preferably a mixed solution containing a carbonyl-containing solvent having an ester group, a ketone group or an aldehyde group. The carbonyl-containing solvent has an effect of retarding the reaction between the epoxy resin and the epoxy resin-curing agent, thereby preventing rapid increase in viscosity of the coating solution. Examples of the carbonyl-based solvent include at least one relatively low-boiling compound selected from the group consisting of ethyl acetate, acetone, methyl ethyl ketone, acetaldehyde and propionaldehyde. In order to obtain a laminated film containing a less amount of the residual solvent, the content of the carbonyl-based solvent is preferably 20% by weight or lower on the basis of the total solvents. When the amount of the residual solvent in the laminated film is large, there tend to occur the generation of malodor. Therefore, the amount of the residual solvent is preferably 7 mg/m² or smaller. When the amount of the residual solvent exceeds 7 mg/m², the resultant laminated film generates malodor. In order to more surely prevent the generation of malodor, the amount of the residual solvent is more preferably 5 mg/m² or smaller and still more preferably 3 mg/m² or smaller.

After laminating the sealant layer, the resultant laminate is preferably aged at 20 to 60°C for a predetermined period of time, if required, to complete the curing reaction. The aging allows the production of a cured product of the epoxy resin at a sufficient reaction rate, ensures a high gas-barrier property and a high adhesion strength, and prevents the problems such as blocking and elution of additives.

In the dry lamination method, the laminated film may also be produced by forming the respective layers in the order reverse to the above procedure. More specifically, the adhesive coating solution is applied onto, in place of a substrate, a polyolefin-based film such as a polyethylene film and a polypropylene film or an ethylene-vinyl acetate copolymer-based film which serves as the sealant layer, and then dried to form an adhesive layer. Thereafter, a primer layer and an ink layer are successively formed on the adhesive layer. Then, a substrate made of a stretched polypropylene film, polyamide-based film or polyethylene terephthalate film is laminated, to produce the aimed laminated film. The nip roll temperature for laminating the substrate is preferably 20 to 120°C and more preferably 40 to 100°C.

In the non-solvent (solvent-free) lamination method, immediately after applying an adhesive which is pre-heated to about 40 to 100°C onto a primer layer using a roll such as a gravure roll heated to 40 to 120°C, a sealant layer is laminated to the surface of the adhesive layer to obtain a laminated film. The obtained laminated film is preferably aged for a predetermined period of time, if required, as in the case of the dry lamination method.

In the extrusion lamination method, the adhesive coating solution is applied onto a primer layer using a roll such as a gravure roll, the solvent is removed at 20 to 140°C, and the curing reaction is allowed to proceed. Thereafter, a molten material for the sealant layer from an extruder is laminated, to obtain the laminated film.
The laminating methods mentioned above and other known laminating methods may be used in combination, if desired.

The final thickness of the adhesive layer is preferably 0.1 to 100 µm and more preferably 0.5 to 10 µm. Within the above range, the adhesive layer acquires a uniform thickness without reducing the gas-barrier property and adhesion property.

The laminated film of the present invention has an excellent lamination strength. The lamination strength measured at a peeling speed of 300 mm/min varies depending upon the materials for the substrate or the sealant layer. For example, when using a stretched nylon film as the substrate, the lamination strength is preferably 600 g/15 mm or more, more preferably 700 g/15 mm or more and still more preferably 800 g/15 mm or more if the sealant layer is formed of a low-density polyethylene film, and the lamination strength is preferably 300 g/15 mm or more, more preferably 400 g/15 mm or more and still more preferably 500 g/15 mm or more if the sealant layer is formed of an unstretched polypropylene film.

The laminated film of the present invention is applicable to a multi-layer packaging material for preserving foods, drugs, etc. The layered structure of the multi-layer packaging material may vary depending upon kinds of contents to be preserved as well as the environmental conditions and manners of use. For example, the laminated film of the present invention may be directly used as the multi-layer packaging material. Alternatively, an optional layer such as an oxygen-absorbing layer, a thermoplastic resin film layer, a paper layer and a metal foil layer may be further laminated to the laminated film of the present invention, if desired. The optional layer may be laminated by using either the adhesive described above or other adhesives or anchor coat agents.

After forming or without forming the optional layer, the laminated film is folded up or the laminated films are superposed so as to allow the sealant layers to face to each other, and then, the peripheral portion is heat-sealed, to produce a packaging bag. The heat-sealing is suitably selected from, for example, a side sealing, a two-side sealing, a three-side sealing, an envelope sealing, a butt-seam sealing (pillow sealing), a flat bottom sealing, a square bottom sealing and a gazette sealing depending upon the kinds of contents to be preserved as well as the environmental conditions and manners of use. In addition, the laminate film can be made into a self-standing bag (standing pouch) or the like. The heat-sealing may be performed by known methods such as bar sealing, rotating roll sealing, belt sealing, impulse sealing, high-frequency sealing and ultrasonic sealing.

After placing the contents into the packaging bag, the opening of the packaging bag is closed by heat-sealing to produce a packaged product using the laminated film of the present invention. Examples of the contents to be preserved include various foods such as confectioneries, staples, processed agricultural products, processed livestock products, processed marine products, fruits, vegetables, cooked foodstuffs, dairy products, liquid seasonings and pet foods. In addition, the laminated film may be also used as a packaging material for tobaccos, disposable pocket heaters, medicines, cosmetics, etc.

### EXAMPLES

The present invention is described in more detail by reference to the following examples. However, it should be noted that the following examples are only illustrative and not intended to limit the invention thereto.

Various properties were measured and evaluated by the following methods.

### (1) Oxygen Transmission Coefficient (mL·mm/(m²·day·MPa))

The oxygen transmission coefficient of the adhesive layer was measured at 23°C and a relative humidity of 60% using an oxygen permeability measuring apparatus "OX-TRAN 10/50A" available from Modern Controls, Inc.

### (2) Lamination Strength (g/15 mm)

According to the method prescribed in JIS K-6854, the laminated film was subjected to T-peel test to measure the lamination strength at a peeling speed of 300 mm/min.

### (3) Heat-Seal Strength (kg/15 mm)

Sealant layers of two laminated films were heat-sealed at 150°C under a pressure of 2 kg/cm² for one second using a heat-gradient heat sealing apparatus ("Type Hag-100") available from Toyo Seiki Seisaku-Sho, Ltd., and the strength of the heat-sealed portion was measured by the same method as in the measurement of the lamination strength.

### PRODUCTION EXAMPLE 1

### Epoxy Resin-Curing Agent A

Into a reaction vessel, 1 mol of m-xylylenediamine was charged. After raising the temperature to 60°C under a nitrogen gas flow, 0.93 mol of methyl acrylate was added dropwise over 1 h. After completion of the addition, the contents were stirred at 120°C for 1 h and then the temperature was raised to 160°C over 3 h while distilling off the by-produced methanol. After cooling to 100°C, the solid concentration was adjusted to 70% by weight by the addition of methanol, to obtain an epoxy resin-curing agent A diluted with methanol. The content of amide groups in the epoxy resin-curing agent A was 21% by weight on the basis of the solid content.

### EXAMPLE 1

A mixture was prepared by mixing 50 parts by weight of a glycidylamino-containing epoxy resin derived from m-xylylenediamine ("TETRAD-X" available from Mitsubishi Gas Chemical Company, Inc.), 146 parts by weight of the epoxy resin-curing agent A, 211 parts by weight of methanol and 28 parts by weight of ethyl acetate (solid content: 35% by weight; methanol/ethyl acetate = 9/1 solution). The mixture was added with 0.4 part by weight of an acrylic wetting agent "BYK381" available from BYK Chemie GmbH and then sufficiently stirred to prepare an adhesive having a Zahn cup (No. 3) viscosity of 14 s at 25°C.

Separately, a polyurethane resin-based white gravure ink "NT-HiLamic 701R White" available from Dainichiseika Color & Chemicals Mfg. Co., Ltd. was mixed with a curing agent "NT-HiLamic Hardener" available from Dainichiseika Color & Chemicals Mfg. Co., Ltd. in an amount of 5% on the basis of the ink. The mixture was added with an ethyl acetate/MEK/IPA mixed solvent (4/4/2) to prepare an ink composition having a Zahn cup (No. 3) viscosity of 16 s at 25°C. The prepared ink composition was applied onto a 15 µm-thick stretched 6-nylon film "Harden N1102" available from Toyobo Co., Ltd., thereby forming an ink layer on the nylon film.

A polyurethane resin-based medium "NT HiLamic-R Medium" (corresponding to a primer) available from Dainichiseika Color & Chemicals Mfg. Co., Ltd. was mixed with an ethyl acetate/MEK/IPA mixed solvent (4/4/2) to prepare a coating solution having a Zahn cup (No. 3) viscosity of 16 s at 25°C. The coating solution was applied onto the ink layer using a roll having an engraved depth of 38 µm to form a primer layer on the ink layer.

Next, the adhesive prepared above was applied onto the primer layer using a gravure roll having a pitch of 100 lines/cm and a depth of 100 µm, and dried in a drying oven at 60°C (around the inlet) to 90°C (around the outlet), thereby forming an adhesive layer on the primer layer. Then, a 40 µm-thick linear polyethylene film "T.U.X. MC-S" available from Tohcello Co., Ltd. was laminated on the adhesive layer using a nip roll heated to 70°C. The resultant laminate was wound up into a roll at a take-up speed of 130 m/min, and the roll was aged at 40°C for 4 days, thereby obtaining a laminated film of a layer structure of substrate/ink layer/primer layer/adhesive layer/sealant layer. The results of measurements on the laminated film are shown in Table 1. The content of the skeletal structure of the formula 1 in the adhesive layer (cured product of the epoxy resin) was 62.0% by weight. The thickness of the adhesive layer was 38 µm and the oxygen transmission coefficient at 23°C and 60% RH which was calculated from the oxygen permeability was 0.3 mL·mm/(m²·day·MPa).

### EXAMPLE 2

A laminated film was produced in the same manner as in Example 1 except for using a polyurethane resin/vinyl chloride-vinyl acetate copolymer resin-based white gravure ink "NB300 SC White" available from Dainichiseika Color & Chemicals Mfg. Co., Ltd. in place of the polyurethane resin-based white gravure ink. The results are shown in Table 1.

### COMPARATIVE EXAMPLE 1

A laminated film was produced in the same manner as in Example 1 except for using no medium. The results are shown in Table 1.

### COMPARATIVE EXAMPLE 2

A laminated film was produced in the same manner as in Example 2 1 except for using no medium. The results are shown in Table 1.

**TABLE 1**

| Oxygen transmission coefficient (mL·mm/m²·day·MPa) | | Lamination strength (g/15 mm) | Heat seal strength (kg/15 mm) |
|---|---|---|---|
| Examples | | | |
| 1 | 70.3 | 850 | 6.0 |
| 2 | 70.2 | 820 | 5.9 |
| Comparative Examples | | | |
| 1 | 70.4 | 200 | 3.0 |
| 2 | 70.4 | 220 | 3.2 |

### INDUSTRIAL APPLICABILITY

The laminated film of the present invention has a less content of a residual solvent impregnated therein even when using a polyamide-based film as a substrate, resulting in facilitated drying process. The laminated film exhibits a high gas-barrier property and a good pinhole resistance. Further, the laminated film has a good lamination strength even when the substrate is printed. The laminated film is suitably used as a halogen-free gas-barrier material in various applications.

## Claims

1. A laminated film comprising at least a substrate, a primer layer, an ink layer, an adhesive layer and a sealant layer which are laminated in this order, wherein
(i) the substrate is a polyamide-based film,
(ii) the ink layer comprises an ink composition for polymer films;
(iii) the primer layer comprises at least one primer resin selected from the group consisting of polyurethane-based resins, vinyl chloride-vinyl acetate copolymer-based resins, rosin-based resins, polyamide-based resins and chlorinated olefin-based resins,
(iv) the adhesive layer is made of an adhesive containing, as a main component, an epoxy composition which comprises an epoxy resin and an epoxy resin-curing agent; a cured product of the epoxy composition containing a skeletal structure represented by the following formula 1: 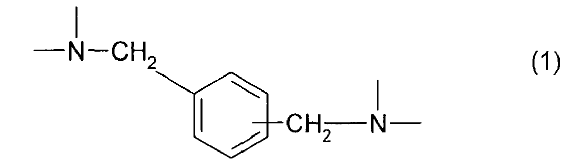 in an amount of 40% by weight or higher; and
(v) the sealant layer is made of a flexible polymer being at least one resin selected from low-density polyethylene, linear low-density polyethylene and polypropylene or an ethylene-vinyl acetate copolymer.

2. The laminated film according to claim 1, wherein the primer layer comprises at least one primer resin selected from the group consisting of polyurethane-based resins and vinyl chloride-vinyl acetate copolymer-based resins.

3. The laminated film according to claim 1 or 2, wherein the adhesive layer has an oxygen transmission coefficient of 1.0 mL·mm / (m²·day·MPa) or lower when measured at 23°C and a relative humidity of 60%.

4. The laminated film according to any one of claims 1 to 3, which is produced by dry lamination.

## Patentansprüche

1. Ein laminierter Film, umfassend mindestens ein Substrat, eine Primerschicht, eine Tintenschicht, eine Haftschicht und eine Versiegelungsschicht, welche in dieser Reihenfolge laminiert werden, worin,
(i) das Substrat ein Polyamid-basierter Film ist,
(ii) die Tintenschicht eine Tintenzusammensetzung für Polymerfilme enthält;
(iii) die Primerschicht mindestens ein Primerharz enthält, das ausgewählt wird aus der Gruppe, die aus Polyurethan-basierten Harzen, Vinylchlorid-Vinylacetat-Copolymer-basierten Harzen, Kolophonium-basierten Harzen, Polyamid-basierten Harzen und Harzen auf der Basis chlorierter Olefine,
(iv) die Haftschicht aus einem Klebstoff hergestellt ist, enthaltend als eine Hauptkomponente eine Epoxidzusammensetzung, welche ein Epoxidharz und einen Epoxidharzhärter enthält; wobei ein gehärtetes Produkt aus der Epoxidzusammensetzung ein Grundgerüst enthält, das durch die nachfolgende Formel 1 dargestellt ist: 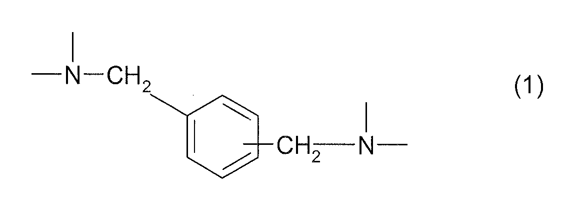
(v) die Dichtungsschicht aus einem flexiblen Polymer hergestellt ist, das mindestens ein Harz ist, welches ausgewählt wird aus Polyethylen niedriger Dichte, linearem Polyethylen niedriger Dichte und Polypropylen oder einem Ethylen-Vinylacetat Copolymer.

2. Der laminierte Film gemäß Patentanspruch 1, worin die Primerschicht mindestes ein Primerharz, ausgewählt aus der Gruppe bestehend aus Polyurethan-basierten Harzen und Vinylchlorid-Vinylacetat-Copolymer-basierten Harzen, enthält.

3. Der laminierte Film gemäß Patentanspruch 1 oder 2, worin die Haftschicht, wenn bei 23°C und einer relativen Feuchtigkeit von 50 % gemessen, einen Sauerstoffdurchgangskoeffizienten von 1.0 mL· mm/(m² · Tag · MPa) oder geringer hat.

4. Der laminierte Film gemäß einem der Patentansprüche 1 bis 3, welcher durch trockene Laminierung hergestellt wird.

## Revendications

1. Film stratifié comprenant au moins un substrat, une couche d'amorce, une couche d'encre, une couche adhésive et une couche de mastic d'étanchéité, qui sont stratifiées en cet ordre,
dans lequel
(i) le substrat est un film à base de polyamide,
(ii) la couche d'encre comprend une composition d'encre pour des films polymères ;
(iii) la couche d'amorce comprend au moins une résine d'amorce sélectionnée parmi le groupe consistant en les résines à base de polyuréthane, les résines à base de copolymère de chlorure de vinyle - acétate de vinyle, les résines à base de colophane, les résines à base de polyamide et les résines à base d'oléfine chlorée,
(iv) la couche adhésive est fabriquée en un adhésif contenant, en tant qu'un constituant principal, une composition d'époxy qui comprend une résine d'époxy et un agent durcissant de résine d'époxy, un produit durci de la composition d'époxy comprenant une structure skelettique représentée par la formule suivante (1) : 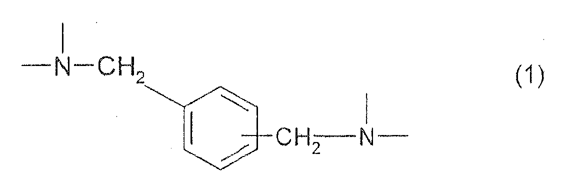 d'une quantité de 40 % en poids ou plus ; et
(v) la couche de mastic d'étanchéité est fabriquée en un polymère flexible étant au moins une résine sélectionnée parmi le polyéthylène à basse densité, le polyéthylène à basse densité linéaire et le polypropylène ou un copolymère d'éthylène - acétate de vinyle.

2. Film stratifié selon la revendication 1, dans lequel la couche d'amorce comprend au moins une résine d'amorce sélectionnée parmi le groupe consistant en les résines à base de polyuréthane et les résines à base de copolymère de chlorure de vinyle - acétate de vinyle.

3. Film stratifié selon la revendication 1 ou 2, dans lequel la couche adhésive a un coefficient de transfert d'oxygène de 1,0 ml·mm/(m²·jour·Mpa) ou plus bas lorsque mesuré à 23 °C et une humidité relative de 60 %.

4. Film stratifié selon l'une des revendications 1 à 3, qui est produit par stratification sèche.
